Europäisches Patentamt

European Patent Office

Office européen des brevets

(19)

(11) **EP 1 520 965 A1**

(12) **EUROPÄISCHE PATENTANMELDUNG**

(43) Veröffentlichungstag:
06.04.2005 Patentblatt 2005/14

(51) Int Cl.$^7$: **F02B 29/04**, F02B 37/00

(21) Anmeldenummer: 03103666.8

(22) Anmeldetag: 02.10.2003

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(71) Anmelder: **Ford Global Technologies, LLC, A subsidary of Ford Motor Company**
**Dearborn, MI 48126 (US)**

(72) Erfinder: **Will, Frank**
**51467, Bergisch-Gladbach (DE)**

(74) Vertreter: **Drömer, Hans-Carsten, Dr.-Ing. et al**
**Ford-Werke Aktiengesellschaft,**
**Patentabteilung NH/DRP,**
**Henry-Ford-Strasse 1**
**50725 Köln (DE)**

(54) **Verfahren zur Entdrosselung einer Brennkraftmaschine und entdrosselte Brennkraftmaschine**

(57) Die Erfindung betrifft eine Brennkraftmaschine (1) mit einem in einer Ladeluftzuleitung (7) der Brennkraftmaschine (1) angeordneten Aufladeaggregat (2) zur Verdichtung der Ladeluft und einem stromab angeordneten Ladeluftkühler (6) zur anschließenden Ladeluftkühlung, wobei der Ladeluftkühler (6) mit einer ihn umgehenden Bypaßleitung (9) versehen ist, die mit einer Umschaltvorrichtung (10) ausgestattet ist, so daß der Ladeluftstrom stufenlos einstellbar in vorbestimmbar großen Ladeluftteilströmen durch den Ladeluftkühler (6) und / oder die Bypaßleitung (9) führbar ist.

Die Erfindung betrifft auch ein Verfahren zur Entdrosselung einer derartigen Brennkraftmaschine (1).

Es soll eine Brennkraftmaschine (1) der genannten Art und ein Verfahren zur Entdrosselung dieser Brennkraftmaschine (1) bereitgestellt werden, mit dem die nach dem Stand der Technik bekannten Nachteile überwunden werden, und das insbesondere auf bereits auf dem Markt befindliche herkömmliche Brennkraftmaschinen (1) mit Drosselklappe anwendbar ist und eine Nachrüstung erlaubt.

Gelöst wird diese Aufgabe durch ein Verfahren, das dadurch gekennzeichnet ist, daß eine Steuereinheit (11) vorgesehen wird, die in Abhängigkeit der Last- bzw. Leistungsanforderung an die Brennkraftmaschine (1) die Umschaltvorrichtung (10) der Bypaßleitung (9) in der Art regelt, daß mit zunehmender Last der Ladeluftteilstrom durch den Ladeluftkühler (6) vergrößert und der Ladeluftteilstrom durch den Bypaßleitung (9) verkleinert wird und mit abnehmender Last umgekehrt.

Fig.1

## Beschreibung

Die Erfindung betrifft ein Verfahren zur Entdrosselung einer Brennkraftmaschine mit einem in einer Ladeluftzuleitung der Brennkraftmaschine angeordneten Aufladeaggregat zur Verdichtung der Ladeluft und einem stromab angeordneten Ladelüftkühler zur anschließenden Ladeluftkühlung, wobei der Ladeluftkühler mit einer ihn umgehenden Bypaßleitung versehen wird, die mit einer Umschaltvorrichtung ausgestattet wird, so daß der Ladeluftstrom stufenlos einstellbar in vorbestimmbar großen Ladeluftteilströmen durch den Ladeluftkühler und / oder die Bypaßleitung führbar ist.

Des Weiteren betrifft die Erfindung eine entdrosselte Brennkraftmaschine mit einem in einer Ladeluftzuleitung der Brennkraftmaschine angeordneten Aufladeaggregat zur Verdichtung der Ladeluft und einem stromab angeordneten Ladeluftkühler zur anschließenden Ladeluftkühlung, wobei der Ladeluftkühler mit einer ihn umgehenden Bypaßleitung versehen ist, die mit einer Umschaltvorrichtung ausgestattet ist, so daß der Ladeluftstrom stufenlos einstellbar in vorbestimmbar großen Ladeluftteilströmen durch den Ladeluftkühler und / oder die Bypaßleitung führbar ist.

Aufgrund der begrenzten Ressourcen an fossilen Energieträgern, insbesondere aufgrund der begrenzten Vorkommen an Mineralöl als Rohstoff für die Gewinnung von Brennstoffen für den Betrieb von Verbrennungskraftmaschinen, ist man bei der Entwicklung von Verbrennungsmotoren ständig bemüht, den Kraftstoffverbrauch zu minimieren, wobei eine verbesserte d.h. effektivere Verbrennung im Vordergrund der Bemühungen steht.

Problematisch ist der Kraftstoffverbrauch und damit der Wirkungsgrad insbesondere bei Ottomotoren. Der Grund hierfür liegt im prinzipiellen Arbeitsverfahren des Ottomotors. Der Ottomotor arbeitet mit einem homogenen Brennstoff-Luftgemisch, daß - sofern keine Direkteinspritzung vorliegt - durch äußere Gemischbildung aufbereitet wird, indem in die angesaugte Luft im Ansaugtrakt Kraftstoff eingebracht wird. Die Einstellung der gewünschten Leistung erfolgt durch Veränderung der Füllung des Brennraumes, so daß dem Arbeitsverfahren des Ottomotors - anders als beim Dieselmotor - eine Quantitätsregelung zugrunde liegt.

Diese Laststeuerung erfolgt in der Regel mittels einer im Ansaugtrakt vorgesehenen Drosselklappe. Durch Verstellen der Drosselklappe kann der Druck der angesaugten Luft hinter der Drosselklappe mehr oder weniger stark reduziert werden. Je weiter die Drosselklappe geschlossen ist d. h. je mehr sie den Ansaugtrakt versperrt desto höher ist der Druckverlust der angesaugten Luft über die Drosselklappe hinweg und desto geringer ist der Druck der angesaugten Luft hinter der Drosselklappe und vor dem Einlaß in den Brennraum. Bei konstantem Brennraumvolumen kann auf diese Weise über den Druck der angesaugten Luft die Luftmasse d. h. die Quantität eingestellt werden. Dies erklärt auch, weshalb sich diese Art der Quantitätsregelung gerade im Teillastbereich als nachteilig erweist, denn geringe Lasten erfordern eine hohe Drosselung und Druckabsenkung im Ansaugtrakt.

Die Quantitätsregelung mittels Drosselklappe hat thermodynamische Nachteile. Aufgrund der Druckabsenkung der angesaugten Luft wird der vier Takte umfassende Kreisprozeß thermodynamisch nachteilig beeinflußt, da durch die Drosselung der innere Mitteldruck $p_{mi}$ infolge des reduzierten Drucks der angesaugten Luft und den damit verbundenen größeren Ladungswechselverlusten absinkt. Zusammen mit dem Hubvolumen $V_h$ ergibt der innere Mitteldruck $p_{mi}$ die gewonnene Arbeit pro Arbeitsspiel $W_A$. Es gilt:

$$p_{mi} * V_h = \int pdV = W_A$$

Weitere erhebliche Wirkungsgradverluste ergeben sich durch Wandwärmeverluste Q infolge des Wärmeüberganges von den Verbrennungsgasen an die Brennraumwände im Brennraum.

Um die beschriebenen Verluste - die Drosselverluste einerseits und die Wärmeübergangsverluste andererseits - zu senken, wurden verschiedene Strategien zur Laststeuerung entwickelt, die sich im Stand der Technik wiederfinden.

Aufgrund der Tatsache, daß beim Ottomotor durch die prinzipbedingte Drosselregelung im Teillastbereich hohe Ladungswechselverluste mit den daraus resultierenden relativ schlechten Teillastwirkungsgraden auftreten und andererseits beim Dieselmotor die Qualitätsregelung zu einem relativ guten Wirkungsgrad im Teillastbereich und damit zu einem günstigen Kraftstoffverbrauch führt, wurden schon früh Versuche unternommen, beide Arbeitsverfahren miteinander zu kombinieren.

Ein Lösungsansatz zur Entdrosselung nach dem Stand der Technik ist beispielsweise ein ottomotorisches Arbeitsverfahren mit geschichteter Brennraumladung. Die direkte Einspritzung des Kraftstoffes kann dabei ein geeignetes Mittel zur Realisierung der geschichteten Brennraumladung sein. Die Direkteinspritzung des Kraftstoffes in den Brennraum führt neben der Vermeidung von Drosselverlusten ebenfalls zu einer Verminderung der Wärmeverluste, da die sich im Brennraum bewegende Flamme mit ihrer ungünstig hohen Wärmeübertragung nur auf einen kleinen Teil der Brennrauminnenwand trifft.

Eine andere Möglichkeit den Verbrennungsprozeß eines Ottomotors zu optimieren, besteht in der Verwendung eines variablen Ventiltriebs. Im Gegensatz zu konventionellen Ventiltrieben, bei denen sowohl der Hub der Ventile als auch die Steuerzeiten, d. h. die Öffnungs- und Schließzeiten der Einlaß- und Auslaßventile, bedingt durch die nicht flexible, da nicht verstellbare Mechanik des Ventiltriebes als unveränderliche Größen vorgegeben sind, können diese den Verbrennungsprozeß und damit den Kraftstoffverbrauch beeinflussenden Parameter mittels variabler Ventiltriebe mehr oder weniger stark variiert werden. Die ideale Lösung wäre eine voll variable Ventilsteuerung, die für jeden beliebigen Betriebspunkt des Ottomotors speziell abgestimmte Werte für den Hub und die Steuerzeiten zuläßt.

Spürbare Kraftstoffeinsparungen können aber auch mit nur teilweise variablen Ventiltrieben erzielt werden. Ein solcher Ventiltrieb ist beispielsweise der VALVETRONIC Ventiltrieb von BMW, wie er in der Motortechnischen Zeitung, Jahrgang 2001, Heft 6, Seite 18 beschrieben wird.

Bei diesem Ventiltrieb kann die Schließzeit des Einlaßventils und der Einlaßventilhub variiert werden. Hierdurch ist eine drosselfreie und damit verlustfreie Laststeuerung möglich.
Die während des Ansaugvorganges in den Brennraum einströmende Gemischmasse wird dabei nicht wie bei konventionellen Ottomotoren mittels einer im Ansaugtrakt angeordneten Drosselklappe gesteuert d. h. bemessen, sondern über den Einlaßventilhub und die Öffnungsdauer des Einlaßventils.

Ein variabler Ventiltrieb wurde ebenfalls von Porsche als ein Lösungsansatz erkannt und mit der VarioCam Plus realisiert.

Grundsätzlich kann der Wirkungsgrad im Teillastbereich auch durch die Abschaltung eines oder mehrerer Zylinder verbessert d. h. erhöht werden. DaimlerChrysler schlägt eine Zylinderabschaltung vor, bei der bei acht bzw. zwölf Zylindermotoren ganze Zylinderbänke abgeschaltet werden.

Die aufgezeigten Konzepte weisen alle den Nachteil auf, daß sie nicht universal einsetzbar sind, sondern nur bei zukünftigen Motorengenerationen berücksichtigt werden können und sich nicht für eine Nachrüstung eignen. Ein Konzept zur Entdrosselung von mit Drosselklappen ausgestatteten Ottomotoren, das auch bei bereits auf dem Markt befindlichen Motoren angewendet werden könnte, wird im Stand der Technik nicht aufgezeigt.

Es muß weiter berücksichtigt werden, daß sich eine Entwicklung hin zu kleinen, hochaufgeladenen Motoren vollzogen hat und weiter vollzieht. Dabei ist die Aufladung in erster Line ein Verfahren zur Leistungssteigerung, bei dem die für den motorischen Verbrennungsprozeß benötigte Luft verdichtet wird, so daß pro Arbeitsspiel eine größere Luftmasse in den Brennraum gelangt. Dadurch kann die Kraftstoffmasse gesteigert werden. Bei gezielter Auslegung der Aufladung können ebenfalls Vorteile im Wirkungsgrad und bei den Abgasemissionen erzielt werden.

Ein typischer Vertreter der kleinen, hochaufgeladenen Motoren ist ein Ottomotor mit Abgasturboaufladung, bei der die Abgasenergie zur Verdichtung der Verbrennungsluft eingesetzt wird, und der zusätzlich über eine Ladeluftkühlung verfügt, mit der die komprimierte Verbrennungsluft vor Eintritt in den Brennraum runtergekühlt wird. Der Ladeluftkühler senkt die Lufttemperatur und steigert damit die Dichte der Luft, wodurch auch der Kühler zu einer besseren Füllung des Brennraums mit Luft d.h. zu einer größeren Luftmasse beiträgt.

Insbesondere für derartige Motoren steht kein Verfahren und keine Vorrichtung zur Entdrosselung zur Verfügung.

Allerdings zeigt der Stand der Technik bereits Verfahren und Vorrichtungen auf, die zumindest während der Warmlaufphase die Wandwärmeverluste Q infolge des Wärmeüberganges von den Verbrennungsgasen an die Brennraumwände im Brennraum vermindern. Im Vordergrund dieser Lösungsansätze steht jedoch die Beseitigung der Nachteile der Rückkühlung der Ladeluft bei noch kaltem d.h. nicht auf Betriebstemperatur befindlichem Motor, nämlich dem härteren Motorlauf, den höheren Verbrennungsgeräuschen und den verschlechterten Zündbedingungen entgegenzuwirken.

So offenbart die DE 39 29 123 A1 eine Brennkraftmaschine mit einem Aufladeaggregat für die Ladeluft und einem ladeluftbeaufschlagbaren Ladeluftkühler, wobei von der zum Ladeluftkühler führenden Ladeluftzuleitung eine den Ladeluftkühler umgehende Umgehungsleitung abzweigt, die wieder hinter dem Ladeluftkühler in die von dem Ladeluftkühler wegführenden Ladeluftzuleitung mündet. Diese Umgehungsleitung ist unter Einsatz einer Umschalteinrichtung in Abhängigkeit einer in der Ladeluftleitung oder Abgasleitung erfaßbaren Temperatur betätigbar.

In Abhängigkeit von der erfaßten Temperatur werden die beiden Ladeluftteilströme - der durch den Ladeluftkühler geführte Teilstrom einerseits und der über die Umgehungsleitung geführte Teilstrom andererseits - geregelt, wobei sich infolge des Zusammenführens der Teilströme die gewünschte Mischtemperatur der Ladeluft einstellt. Die Umschalteinrichtung wird dabei vorzugsweise mittels einer wärmebedingten Verformung eines temperaturabhängigen Dehnkörpers gesteuert.

Eine Brennkraftmaschine dieser Art ist ebenfalls Gegenstand der DE 195 07 961 A1 und der DE 36 27 686 A1, wobei die letztgenannte deutsche Offenlegungsschrift in erster Linie einen Ladeluftkühler mit Bypaßleitung offenbart, bei dem die Bypaßleitung bei Über- bzw. Unterschreiten einer bestimmten Temperatur $T_{gr}$ nur ein- oder ausgeschaltet werden kann, d. h. entweder der gesamte Ladeluftstrom durch den Ladeluftkühler geführt wird oder durch die Bypaßleitung. Erst bei einer zweiten Ausführungsform wird der Ladeluftstrom dann kontinuierlich in Abhängigkeit der Temperatur von der Bypaßleitung auf den Ladeluftkühler umgelegt. Die DE 195 07 961 A1 ist die einzige Schrift, die erwähnt und aufzeigt, daß neben der Temperatur der Brennkraftmaschine zusätzliche d.h. weitere Brennkraftmaschinen-Betriebsparameter als Steuergrößen hinzugezogen werden können, ohne jedoch diese zu nennen.

Die drei zitierten deutschen Offenlegungsschriften haben ausschließlich die Warmlaufphase der Brennkraftmaschine zum Gegenstand, wobei das gemeinsame Ziel der in diesen Schriften offenbarten Brennkraftmaschinen und Verfahren ist, Konzept aufzuzeigen, wie die bei kaltem Motor unnötige und sogar schädliche Ladeluftkühlung steuerbar ist.

Jedoch finden sich im Stand der Technik - wie bereits erwähnt - keine Konzepte, mit denen bei einer herkömmlichen Brennkraftmaschine mit Abgasturboaufladung und Ladeluftkühlung eine wirkungsvolle Entdrosselung während des gesamten Betriebes und gleichzeitig eine Verminderung der Wandwärmverluste realisiert werden könnte.

Vor diesem Hintergrund ist es die Aufgabe der vorliegenden Erfindung ein Verfahren zur Entdrosselung einer Brennkraftmaschine mit Aufladung und Ladeluftkühlung aufzuzeigen, mit dem die nach dem Stand der Technik bekannten Nachteile überwunden werden, und das insbesondere auf bereits auf dem Markt befindliche herkömmliche Brennkraftmaschinen mit Drosselklappe anwendbar ist und eine Nachrüstung erlaubt.

Eine weitere Teilaufgabe der vorliegenden Erfindung ist es, eine entdrosselte Brennkraftmaschine bereitzustellen, die u. a. ein Verfahren der genannten Art realisiert.

Gelöst wird die erste Teilaufgabe durch ein Verfahren zur Entdrosselung einer Brennkraftmaschine mit einem in einer Ladeluftzuleitung der Brennkraftmaschine angeordneten Aufladeaggregat zur Verdichtung der Ladeluft und einem stromab angeordneten Ladeluftkühler zur anschließenden Ladeluftkühlung, wobei der Ladeluftkühler mit einer ihn umgehenden Bypaßleitung versehen wird, die mit einer Umschaltvorrichtung ausgestattet wird, so daß der Ladeluftstrom stufenlos einstellbar in vorbestimmbar großen Ladeluftteilströmen durch den Ladeluftkühler und / oder die Bypaßleitung führbar ist, und das dadurch gekennzeichnet ist, daß eine Steuereinheit vorgesehen wird, die in Abhängigkeit der Last- bzw. Leistungsanforderung an die Brennkraftmaschine die Umschaltvorrichtung der Bypaßleitung in der Art regelt, daß mit zunehmender Last der Ladeluftteilstrom durch den Ladeluftkühler vergrößert und der Ladeluftteilstrom durch die Bypaßleitung verkleinert wird und mit abnehmender Last umgekehrt.

Mittels des erfindungsgemäßen Verfahrens können die thermodynamischen Nachteile d. h. die Ladungswechselverluste, welche sich infolge der Quantitätsregelung mittels Drosselklappe ergeben, abgeschwächt werden. Die Füllung des Brennraums mit Ladeluft d.h. die Ladeluftmasse wird nicht mehr ausschließlich durch Verstellen der Drosselklappe wie bei herkömmlichen Brennkraftmaschinen eingestellt, sondern durch Aufteilung des Ladeluftstroms in zwei Teilströme, von denen ein Teilstrom durch die Bypaßleitung und der andere Teilstrom durch den Ladeluftkühler geführt wird. Die Größe der einzelnen Teilströme wird entsprechend der Last- bzw. Leistungsanforderung geregelt.

Bei geringer Last wird ein größerer Teil der Ladeluft durch die Bypaßleitung geführt und damit nicht im Ladeluftkühler gekühlt, so daß die in den Brennraum einströmende Ladeluft eine höhere Temperatur und damit eine geringere Dichte aufweist, was eine geringere Füllung d. h. Ladeluftmasse im Brennraum zur Folge hat. Mit anderen Worten gesagt, um die erforderliche Motorlast ohne Ladeluftkühler aufzubringen, muß bzw. kann die Drosselklappe weiter geöffnet werden, so daß die gewollte Entdrosselung der Brennkraftmaschine stattfindet. Der im Teillastbereich über die Drosselklappe generierte Druckverlust kann geringer ausfallen, da die nicht gekühlte Luft eine geringere Dichte aufweist und somit zu der im Teillastbereich erforderlichen geringeren Brennraumfüllung bereits beiträgt.

Die Drosselklappe soll nur als ein Beispiel eines Steuerorgans verstanden werden. So treten bei Brennkraftmaschinen, die nicht mit einer Drosselklappe ausgestattet sind, sondern sich einer variablen Ventilsteuerung zur Laststeuerung bedienen auch Drosselverluste auf. Zwar werden hier nicht durch Verstellen einer Drosselklappe Druck- bzw. Drosselverluste generiert und damit die Last gesteuert. Die prinzipielle Vorgehensweise kann aber dieselbe sein, wenn das Einlaßventil beispielsweise einen nur geringen Eintrittsquerschnitt zum Einströmen der Ladeluft freigibt und auf diese Weise Drosselverluste generiert. Mittels des erfindungsgemäßen Verfahrens ist es aber auch möglich diese Drosselverluste zu reduzieren.

Ein weiterer Vorteil besteht darin, daß mittels des erfindungsgemäßen Verfahrens ein schnelleres Aufheizen der Brennkraftmaschine nach einem Kaltstart sichergestellt werden kann. Dabei wird der gesamte Ladeluftstrom zunächst ungekühlt durch die Bypaßleitung geführt. Dadurch werden zum einen die Wandwärmeverluste reduziert und zum anderen werden wesentlich schneller die gewünschten Konvertierungsraten im Abgas-Katalysator erreicht, da bei nicht gekühlter Ladeluft der Temperaturanstieg im Abgasstrom ebenfalls schneller vonstatten geht und der Katalysator schneller seine light-off Temperatur erreicht, bei der er anspringt und Schadstoffe konvertiert. Dadurch kann insbesondere die Emission von unverbrannten Kohlenwasserstoffen beim Kaltstart verringert werden.

Des Weiteren eignet sich das erfindungsgemäße Verfahren zur Nachrüstung bereits auf dem Markt befindlicher Motoren, da keine Änderungen am Grundmotor und nur wenige zusätzliche Bauteile erforderlich sind, nämlich eine gegebenenfalls nicht vorhandene Bypaßleitung, eine Umschaltvorrichtung, eine Steuereinheit und mindestens ein Sensor zur Erfassung eines Betriebsparameters, der als Eingangssignal für die Steuereinheit verwendet wird, wobei grundsätzlich auch bereits vorhandene Sensoren zur Laststeuerung verwendet werden können, so daß unter Umständen der Sensor als zusätzliches Bauteil entfällt.

Vorteilhaft sind Ausführungsformen des Verfahrens, bei denen eine Temperatur als Eingangssignal für die Steuereinheit verwendet wird und als Stellgröße dient, wobei die als Stellgröße dienende Temperatur vorzugsweise die Temperatur in der Abgasleitung der Brennkraftmaschine oder die Temperatur in der Ladeluftzuleitung der Brennkraftmaschine ist. Mit Hilfe dieser Temperaturen können nicht nur Aussagen darüber getroffen werden, wie weit die Warmlaufphase nach einem Kaltstart bereits fortgeschritten ist und wann bzw. ob der Katalysator seine light-off Temperatur erreicht bzw. erreicht hat, sondern sie bieten auch Informationen darüber, in welchem Lastbereich der Motor betrieben wird. Des Weiteren können Nachteile vermieden werden, wie sie durch zu hohe Ladelufttemperaturen auftreten können, wie z. B. das Klopfen oder einer Beschädigung des Katalysators infolge zu hoher Abgastemperaturen.

Vorteilhaft sind aber auch Ausführungsformen des Verfahrens, bei denen der Ladedruck als Eingangssignal für die Steuereinheit verwendet wird und als Stellgröße dient. Der Betriebsparameter Ladedruck gibt auch direkten Aufschluß darüber, in welchem Lastbereich die Brennkraftmaschine momentan arbeitet.

Bei herkömmlichen Brennkraftmaschinen, die zur Lastregelung mit einer Drosselklappe ausgestattet sind, sind Ausführungsformen des Verfahrens vorteilhaft, bei denen die Stellung der Drosselklappe als Eingangssignal für die Steuereinheit verwendet wird und als Stellgröße dient. Dies wird dann vorzugsweise durch Aufnahme des Drosselklappenwinkels mittels eines Sensors erfolgen.

Vorteilhaft sind aber auch Ausführungsformen des Verfahrens, bei denen als Umschaltvorrichtung eine Drosselklappe verwendet wird, wobei diese Drosselklappe vorzugsweise elektronisch betätigt wird.

Vorteilhaft sind aber auch Ausführungsformen des Verfahrens, bei denen als Umschaltvorrichtung ein pneumatisch gesteuertes Ventil verwendet wird. Dies ermöglicht die Verwendung von sich in der Brennkraftmaschine einstellenden Drücken, beispielsweise des Ladedrucks, zur Steuerung eines derartigen Pneumatikventils.

Bei Brennkraftmaschinen, die als Aufladeaggregat einen Abgasturbolader aufweisen, sind Ausführungsformen des Verfahrens vorteilhaft, bei denen eine zweite, die Turbine des Abgasturboladers umgehende Bypaßleitung vorgesehen wird, die mit einer Umschaltvorrichtung ausgestattet ist, so daß der Abgasstrom stufenlos einstellbar in vorbestimmbar großen Abgasluftteilströmen durch die Turbine des Abgasturboladers und / oder die Bypaßleitung führbar ist. Damit ist der Ladedruck und dadurch wiederum die Luftfüllung im Brennraum steuerbar. Diese vorteilhafte Ausgestaltung des erfindungsgemäßen Verfahrens trägt wesentlich zur Entdrosselung der Brennkraftmaschine und damit zur Lösung der Erfindung zugrunde liegenden Aufgabe bei.

Die zweite der Erfindung zugrunde liegende Teilaufgabe wird durch eine Brennkraftmaschine mit einem in einer Ladeluftzuleitung der Brennkraftmaschine angeordneten Aufladeaggregat zur Verdichtung der Ladeluft und einem stromab angeordneten Ladeluftkühler zur anschließenden Ladeluftkühlung gelöst, wobei der Ladeluftkühler mit einer ihn umgehenden Bypaßleitung versehen ist, die mit einer Umschaltvorrichtung ausgestattet ist, so daß der Ladeluftstrom stufenlos einstellbar in vorbestimmbar großen Ladeluftteilströmen durch den Ladeluftkühler und / oder die Bypaßleitung führbar ist, und die dadurch gekennzeichnet ist, daß eine Steuereinheit vorgesehen ist, die in Abhängigkeit der Last- bzw. Leistungsanforderung an die Brennkraftmaschine die Umschaltvorrichtung der Bypaßleitung in der Art regelt, daß mit zunehmender Last der Ladeluftteilstrom durch den Ladeluftkühler vergrößert und der Ladeluftteilstrom durch die Bypaßleitung verkleinert wird und mit abnehmender Last umgekehrt. Das dieser Brennkraftmaschine zugrunde liegende Verfahren zur Entdrosselung wurde bereits weiter oben erläutert.

Mit anderen Worten gesagt kann durch das Vorsehen und die Verwendung einer den Ladeluftkühler umgehenden Bypaßleitung, die mit einer Umschaltvorrichtung ausgestattet ist, ein Laststeuerungsverfahren zur Anwendung kommen, mit dem eine Entdrosselung realisiert wird.

Eine derartige Brennkraftmaschine verfügt über eine verbrauchsoptimierte Laststeuerung, ohne daß Änderungen am Grundmotor erforderlich wären, wie sie beispielsweise beim Einsatz einer variablen Ventilsteuerung oder bei Anwendung einer Direkteinspritzung unumgänglich sind. Bereits im Verkehr befindliche Motoren können auf einfache Weise mit dieser Art der Laststeuerung nachgerüstet werden.

Vorteilhaft sind Ausführungsformen der Brennkraftmaschine, bei denen ein Sensor zur Lasterfassung vorgesehen ist, so daß die ermittelte Last als Eingangssignal für die Steuereinheit verwendet werden kann und als Stellgröße dient.

Vorteilhaft sind dabei Ausführungsformen der Brennkraftmaschine, bei denen ein Sensor zur Erfassung einer Temperatur vorgesehen ist, so daß diese Temperatur als Eingangssignal für die Steuereinheit verwendet werden kann und als Stellgröße dient.

Vorteilhaft sind Ausführungsformen der Brennkraftmaschine, bei denen der Sensor in der Abgasleitung angeordnet ist, so daß die Temperatur in der Abgasleitung der Brennkraftmaschine als Eingangssignal für die Steuereinheit verwendet werden kann und als Stellgröße dient oder der Sensor in der Ladeluftzuleitung angeordnet ist, so daß die Temperatur in der Ladeluftzuleitung der Brennkraftmaschine als Eingangssignal für die Steuereinheit verwendet werden kann und als Stellgröße dient. Die Vorteile dieser Ausführungsformen, insbesondere die Vorteile der Verwendung einer Temperatur als Stellgröße, wurden bereits im Zusammenhang mit der Beschreibung des erfindungsgemäßen Verfahrens erörtert.

Vorteilhaft sind Ausführungsformen der Brennkraftmaschine, bei denen ein Sensor zur Erfassung des Ladedrucks vorgesehen ist, so daß der Ladedruck als Eingangssignal für die Steuereinheit verwendet werden kann und als Stellgröße dient.

Die erfindungsgemäße Brennkraftmaschine kann zur Laststeuerung grundsätzlich mit verschiedenen Einrichtungen ausgestattet sein. Beispielsweise mit einer Drosselklappe zur Laststeuerung mittels Drosselung der Ladeluft, mit einem variablen Ventiltrieb oder mit einer Direkteinspritzung.

Bei Brennkraftmaschinen, die zur Lastregelung mit einer Drosselklappe ausgestattet sind, sind Ausführungsformen vorteilhaft, bei denen die Stellung dieser Drosselklappe als Eingangssignal für die Steuereinheit verwendet wird und als Stellgröße dient. So könnte bei einer beispielsweise elektronisch gesteuerten Drosselklappe die Stellung der Drosselklappe d.h. der Drosselklappenwinkel ohne größeren Aufwand und ohne den Einsatz einer Vielzahl zusätzlicher Bauteile erfaßt werden.

Für den Fall der Laststeuerung mittels Drosselklappe, sollte die Drosselklappe vorzugsweise nicht mechanisch sondern elektronisch betätigbar sein und mit der Umschaltvorrichtung in der Bypaßleitung abgestimmt werden. Ein Vorteil dieser vorteilhaften Ausführungsform, bei welcher die beiden Drosselklappen aufeinander abgestimmt werden, ist es, daß beim Verstellen der Umschaltvorrichtung d. h. beim Öffnen bzw. Schließen der Bypaßleitung das Drehmoment des Motors nicht abfällt bzw. ansteigt und der Fahrer das Gaspedal nicht nachführen muß, um die Last zu halten, was bei nicht abgestimmten Drosselklappen der Fall wäre.

Vorteilhaft sind Ausführungsformen der Brennkraftmaschine, bei denen ein Sensor zur Erfassung der Luftmaße vorgesehen ist, so daß die Luftmasse als Eingangssignal für die Steuereinheit verwendet werden kann und als Stellgröße dient.

Grundsätzlich können auch mehrere Sensoren vorgesehen werden, um den momentanen Lastzustand zu erfassen. Beispielsweise Sensoren zur Erfassung der Temperatur, der Drehzahl, des Unterdruckes und der Drosselklappenstellung, aus denen dann mittels eines Algorithmus die Last ermittelt wird. Der Luftmassenstrom kann ebenfalls erfaßt werden und dann für sich alleine oder in Kombination mit anderen Betriebsparametern - wie den genannten - zur Ermittlung der Last dienen.

Vorteilhaft sind Ausführungsformen der Brennkraftmaschine, bei denen die Umschaltvorrichtung in der Bypaßleitung eine Drosselklappe ist, wobei die Drosselklappe vorzugsweise elektronisch betätigbar ist. Diese Drosselklappe kann dann mit der zur Laststeuerung vorgesehenen Drosselklappe abgestimmt werden.

Vorteilhaft sind Ausführungsformen der Brennkraftmaschine, bei denen die Umschaltvorrichtung in der Bypaßleitung ein pneumatisch gesteuertes Ventil ist. Im günstigsten Falle würde hierzu schon ein luftdichter Schlauch genügen, der an seinem einen Ende mit einem Druck, beispielsweise dem Ladedruck beaufschlagt wird, und mit seinem anderen Ende eben dieses pneumatisch gesteuerte Ventil mit diesem Druck beaufschlagt.

Bei Brennkraftmaschinen, die als Aufladeaggregat einen Abgasturbolader aufweisen, sind Ausführungsformen vorteilhaft, die eine zweite, die Turbine des Abgasturboladers umgehende Bypaßleitung aufweisen, die mit einer Umschaltvorrichtung ausgestattet ist, so daß der Abgasstrom stufenlos einstellbar in vorbestimmbar großen Abgasluftteilströmen durch die Turbine des Abgasturboladers und / oder die Bypaßleitung führbar ist.

Vorteilhaft sind des weiteren Ausführungsformen der Brennkraftmaschine, bei denen eine den Verdichter des Aufladeaggregat umgehende Bypaßleitung vorgesehen ist, die mit einer Umschaltvorrichtung ausgestattet ist, so daß der Ladeluftstrom stufenlos einstellbar in vorbestimmbar großen Ladeluftteilströmen durch den Verdichter des Aufladeaggregat und / oder die Bypaßleitung führbar ist.

Ein entsprechendes Verfahren, bei dem eine den Verdichter des Aufladeaggregates umgehende Bypaßleitung verwendet wird, ist dann ebenfalls als vorteilhafte Ausführungsform des erfindungsgemäßen Verfahren anzusehen.

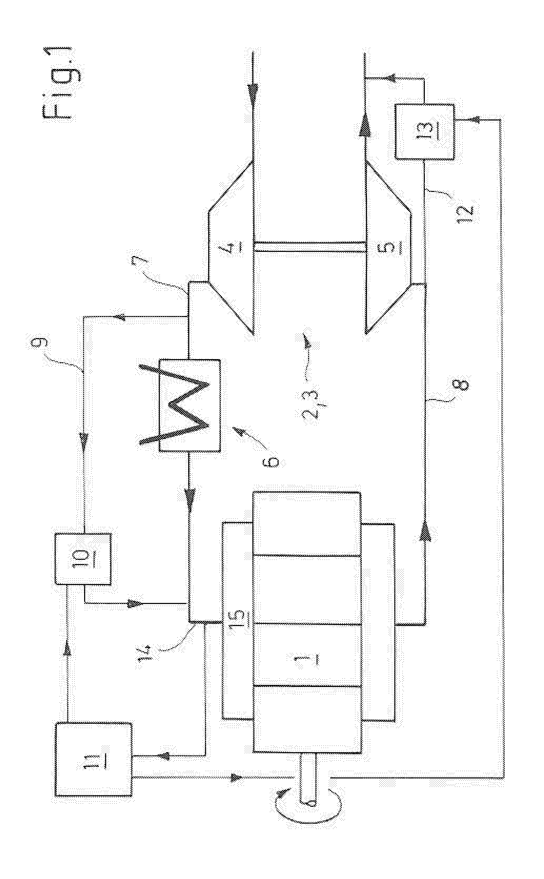

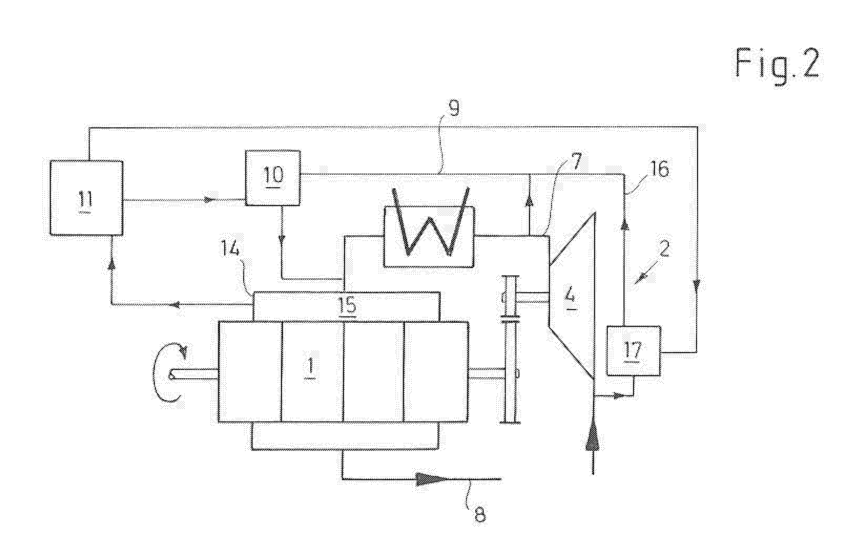

Im folgenden wird die Erfindung anhand zweier Ausführungsbeispiele gemäß der Figur 1 und 2 näher beschrieben. Hierbei zeigt:

Fig. 1      schematisch eine erste Ausführungsform der Brennkraftmaschine, und

Fig. 2      schematisch eine zweite Ausführungsform der Brennkraftmaschine.

Figur 1 zeigt schematisch eine erste Ausführungsform der Brennkraftmaschine 1, welche als Aufladeaggregat 2 einen Abgasturbolader 3 aufweist. Der Verdichter 4 des Abgasturboladers 3 komprimiert zunächst die für die Verbrennung erforderliche Ladeluft, wobei der Verdichter 4 über eine Turbine 5 angetrieben wird, die die Energie der Verbrennungsabgase nutzt.

Nachdem die Ladeluft im Verdichter 4 des Abgasturboladers 3 komprimiert wurde, wird sie über eine Ladeluftzuleitung 7 dem Ladeluftkühler 6 zugeführt und gekühlt. Die gekühlte Ladeluft wird dann über die Ladeluftzuleitung 7 und den Ladeluftverteiler 15 den einzelnen Brennräumen der Brennkraftmaschine 1 zugeführt, wobei zwischen Ladeluftkühler 6 und Ladeluftverteiler 15 eine Drosselklappe zur Laststeuerung vorgesehen werden kann (nicht dargestellt).

Die in Figur 1 dargestellte Ausführungsform ist mit einer den Ladeluftkühler 6 umgehenden Bypaßleitung 9 versehen, die mit einer Umschaltvorrichtung 10 ausgestattet ist, so daß der Ladeluftstrom stufenlos einstellbar in vorbestimmbar großen Ladeluftteilströmen durch den Ladeluftkühler 6 und / oder die Bypaßleitung 9 führbar ist.

Hierzu ist eine Steuereinheit 11 vorgesehen, die in Abhängigkeit der Last- bzw. Leistungsanforderung die Umschaltvorrichtung 10 der Bypaßleitung 9 in der Art regelt, daß mit zunehmender Last der Ladeluftteilstrom durch den Ladeluftkühler 6 vergrößert und der Ladeluftteilstrom durch die Bypaßleitung 9 verkleinert wird und mit abnehmender Last der Ladeluftteilstrom durch den Ladeluftkühler 6 verkleinert und der Ladeluftteilstrom durch die Bypaßleitung 9 vergrößert wird.

D.h. bei geringer Last wird ein größerer Teil der Ladeluft durch die Bypaßleitung 9 geführt und damit nicht im Ladeluftkühler 6 gekühlt, so daß die in den Brennraum einströmende Ladeluft eine höhere Temperatur und damit eine geringere Dichte aufweist, was eine geringere Füllung d. h. Ladeluftmasse im Brennraum zur Folge hat.

Um die erforderliche Motorlast ohne Ladeluftkühler 6 aufzubringen, muß bzw. kann die Drosselklappe (nicht dargestellt) weiter geöffnet werden, so daß die gewollte Entdrosselung der Brennkraftmaschine 1 stattfindet. Der im Teillastbereich über die Drosselklappe generierte Druckverlust kann geringer ausfallen, da die nicht gekühlte Luft eine geringere Dichte aufweist und somit zu der im Teillastbereich erforderlichen geringeren Brennraumfüllung bereits beiträgt.

Als Eingangssignal für die Steuereinheit 11 und damit als Stellgröße dient der Ladedruck. Hierzu ist im Ladeluftverteiler 15 zur Aufnahme des Ladedruckes ein Sensor 14 vorgesehen. Neben dem Ladedruck können aber auch andere oder zusätzliche Betriebsparameter als Eingangssignal verwendet werden wie beispielsweise die Temperatur in der Abgasleitung 8 der Brennkraftmaschine 1, die Temperatur in der Ladeluftzuleitung 7 der Brennkraftmaschine 1 oder aber die Drosselklappenstellung, die Drehzahl und der Unterdruck.

Die in Figur 1 dargestellte Ausführungsform einer Brennkraftmaschine 1 ist mit einem Abgasturbolader 3 als Aufladeaggregat 2 ausgestattet, wobei eine zweite, die Turbine 5 des Abgasturboladers 3 umgehende Bypaßleitung 12 vorgesehen ist, die mit einer Umschaltvorrichtung 13 ausgestattet ist, so daß der Abgasstrom in der Abgasleitung 8 stufenlos einstellbar in vorbestimmbar großen Abgasluftteilströmen durch die Turbine 5 des Abgasturboladers 3 und / oder die Bypaßleitung 9 führbar ist.

Damit ist der Ladedruck und dadurch wiederum die Luftfüllung im Brennraum steuerbar. Diese vorteilhafte Ausführungsform trägt damit wesentlich zur Entdrosselung der Brennkraftmaschine 1 bei.

Figur 2 zeigt schematisch eine zweite Ausführungsform der Brennkraftmaschine 1. Im Unterschied zu der in Figur 1 dargestellten Brennkraftmaschine ist die zweite Ausführungsform mit einem mechanischen Lader als Aufladeaggregat 2 ausgestattet. Im übrigen wird Bezug genommen auf Figur 1. Für dieselben Bauteile wurden dieselben Bezugszeichen verwendet.

Bei dieser Ausführungsform ist eine den Verdichter 4 des Aufladeaggregates 2 umgehende Bypaßleitung 16 vorgesehen ist, die mit einer Umschaltvorrichtung 17 ausgestattet ist, so daß der Ladeluftstrom stufenlos einstellbar in vorbestimmbar großen Ladelufteilströmen durch den Verdichter 4 des Aufladeaggregates 2 und / oder die Bypaßleitung 16 führbar ist.

**Bezugzeichen**

| | |
|---|---|
| 1 | Brennkraftmaschine |
| 2 | Aufladeaggregat |
| 3 | Abgasturbolader |
| 4 | Verdichter |
| 5 | Turbine |
| 6 | Ladeluftkühler |
| 7 | Ladeluftzuleitung |
| 8 | Abgasleitung |
| 9 | Bypaßleitung |
| 10 | Umschaltvorrichtung |
| 11 | Steuereinheit |
| 12 | Bypaßleitung |
| 13 | Umschaltvorrichtung |
| 14 | Sensor |
| 15 | Ladeluftverteiler |
| 16 | Bypaßleitung |
| 17 | Umschaltvorrichtung |

**Patentansprüche**

1. Verfahren zur Entdrosselung einer Brennkraftmaschine (1) mit einem in einer Ladeluftzuleitung (7) der Brennkraftmaschine (1) angeordneten Aufladeaggregat (2) zur Verdichtung der Ladeluft und einem stromab angeordneten Ladeluftkühler (6) zur anschließenden Ladeluftkühlung, wobei der Ladeluftkühler (6) mit einer ihn umgehenden Bypaßleitung (9) versehen wird, die mit einer Umschaltvorrichtung (10) ausgestattet wird, so daß der Ladeluftstrom stufenlos einstellbar in vorbestimmbar großen Ladelufteilströmen durch den Ladeluftkühler (6) und / oder die Bypaßleitung (9) führbar ist, **dadurch gekennzeichnet, daß** eine Steuereinheit (11) vorgesehen wird, die in Abhängigkeit der Last- bzw. Leistungsanforderung an die Brennkraftmaschine (1) die Umschaltvorrichtung (10) der Bypaßleitung (9) in der Art regelt, daß mit zunehmender Last der Ladelufteilstrom durch den Ladeluftkühler (6) vergrößert und der Ladelufteilstrom durch die Bypaßleitung (9) verkleinert wird und mit abnehmender Last umgekehrt.

2. Verfahren zur Entdrosselung einer Brennkraftmaschine (1) nach Anspruch 1, **dadurch gekennzeichnet, daß**

eine Temperatur als Eingangssignal für die Steuereinheit (11) verwendet wird und als Stellgröße dient.

3. Verfahren zur Entdrosselung einer Brennkraftmaschine (1) nach Anspruch 2,
   **dadurch gekennzeichnet, daß**
   die als Stellgröße dienende Temperatur die Temperatur in der Abgasleitung (8) der Brennkraftmaschine (1) ist.

4. Verfahren zur Entdrosselung einer Brennkraftmaschine (1) nach Anspruch 2,
   **dadurch gekennzeichnet, daß**
   die als Stellgröße dienende Temperatur die Temperatur in der Ladeluftzuleitung (7) der Brennkraftmaschine (1) ist.

5. Verfahren zur Entdrosselung einer Brennkraftmaschine (1) nach einem der vorherigen Ansprüche,
   **dadurch gekennzeichnet, daß**
   der Ladedruck als Eingangssignal für die Steuereinheit (11) verwendet wird und als Stellgröße dient.

6. Verfahren zur Entdrosselung einer Brennkraftmaschine (1) nach einem der vorherigen Ansprüche, wobei die Brennkraftmaschine (1) zur Lastregelung mit einer Drosselklappe ausgestattet ist,
   **dadurch gekennzeichnet, daß**
   die Stellung der Drosselklappe als Eingangssignal für die Steuereinheit (11) verwendet wird und als Stellgröße dient.

7. Verfahren zur Entdrosselung einer Brennkraftmaschine (1) nach einem der vorherigen Ansprüche,
   **dadurch gekennzeichnet, daß**
   als Umschaltvorrichtung (10) eine Drosselklappe verwendet wird.

8. Verfahren zur Entdrosselung einer Brennkraftmaschine (1) nach Anspruch 7,
   **dadurch gekennzeichnet, daß**
   die Drosselklappe elektronisch betätigt wird.

9. Verfahren zur Entdrosselung einer Brennkraftmaschine (1) nach einem der Ansprüche 1 bis 6,
   **dadurch gekennzeichnet, daß**
   als Umschaltvorrichtung (10) ein pneumatisch gesteuertes Ventil verwendet wird.

10. Verfahren zur Entdrosselung einer Brennkraftmaschine (1) nach einem der vorherigen Ansprüche, wobei die Brennkraftmaschine (1) als Aufladeaggregat (2) einen Abgasturbolader (3) aufweist,
    **dadurch gekennzeichnet, daß**
    eine zweite, die Turbine (5) des Abgasturboladers (3) umgehende Bypaßleitung (12) vorgesehen wird, die mit einer Umschaltvorrichtung (13) ausgestattet ist, so daß der Abgasstrom stufenlos einstellbar in vorbestimmbar großen Abgasluftteilströmen durch die Turbine (5) des Abgasturboladers (3) und / oder die Bypaßleitung (12) führbar ist.

11. Brennkraftmaschine (1) mit einem in einer Ladeluftzuleitung (7) der Brennkraftmaschine (1) angeordneten Aufladeaggregat (2) zur Verdichtung der Ladeluft und einem stromab angeordneten Ladeluftkühler (6) zur anschließenden Ladeluftkühlung, wobei der Ladeluftkühler (6) mit einer ihn umgehenden Bypaßleitung (9) versehen ist, die mit einer Umschaltvorrichtung (10) ausgestattet ist, so daß der Ladeluftstrom stufenlos einstellbar in vorbestimmbar großen Ladeluftteilströmen durch den Ladeluftkühler (6) und / oder die Bypaßleitung (9) führbar ist,
    **dadurch gekennzeichnet, daß**
    die Brennkraftmaschine (1) mit einer Steuereinheit (11) ausgestattet ist, die in Abhängigkeit der Last- bzw. Leistungsanforderung an die Brennkraftmaschine (1) die Umschaltvorrichtung (10) der Bypaßleitung (9) in der Art regelt, daß mit zunehmender Last der Ladeluftteilstrom durch den Ladeluftkühler (6) vergrößert und der Ladeluftteilstrom durch die Bypaßleitung (9) verkleinert wird und mit abnehmender Last umgekehrt.

12. Brennkraftmaschine (1) nach Anspruch 11,
    **dadurch gekennzeichnet, daß**
    ein Sensor zur Lasterfassung vorgesehen ist, so daß die ermittelte Last als Eingangssignal für die Steuereinheit (11) verwendet werden kann und als Stellgröße dient.

13. Brennkraftmaschine (1) nach Anspruch 11 oder 12,
    **dadurch gekennzeichnet, daß**
    ein Sensor zur Erfassung einer Temperatur vorgesehen ist, so daß diese Temperatur als Eingangssignal für die Steuereinheit (11) verwendet werden kann und als Stellgröße dient.

14. Brennkraftmaschine (1) nach Anspruch 13,
    **dadurch gekennzeichnet, daß**
    der Sensor in der Abgasleitung (8) angeordnet ist, so daß die Temperatur in der Abgasleitung (8) der Brennkraftmaschine (1) als Eingangssignal für die Steuereinheit (11) verwendet werden kann und als Stellgröße dient.

15. Brennkraftmaschine (1) nach Anspruch 13,
    **dadurch gekennzeichnet, daß**
    der Sensor in der Ladeluftzuleitung (7) angeordnet ist, so daß die Temperatur in der Ladeluftzuleitung (7) der Brennkraftmaschine (1) als Eingangssignal für die Steuereinheit (11) verwendet werden kann und als Stellgröße dient.

**16.** Brennkraftmaschine (1) nach einem der Ansprüche 11 bis 15,
**dadurch gekennzeichnet, daß**
ein Sensor zur Erfassung des Ladedrucks vorgesehen ist, so daß der Ladedruck als Eingangssignal für die Steuereinheit (11) verwendet werden kann und als Stellgröße dient.

**17.** Brennkraftmaschine (1) nach einem der Ansprüche 11 bis 16,
**dadurch gekennzeichnet, daß**
die Brennkraftmaschine (1) zur Lastregelung mit einer Drosselklappe ausgestattet ist und die Stellung dieser Drosselklappe als Eingangssignal für die Steuereinheit (11) verwendet wird und als Stellgröße dient.

**18.** Brennkraftmaschine (1) nach einem der Ansprüche 11 bis 17,
**dadurch gekennzeichnet, daß**
ein Sensor zur Erfassung der Luftmasse vorgesehen ist, so daß die Luftmasse als Eingangssignal für die Steuereinheit (11) verwendet werden kann und als Stellgröße dient.

**19.** Brennkraftmaschine (1) nach einem der Ansprüche 11 bis 18,
**dadurch gekennzeichnet, daß**
die Umschaltvorrichtung (10) in der Bypaßleitung (9) eine Drosselklappe ist.

**20.** Brennkraftmaschine (1) nach Anspruch 19,
**dadurch gekennzeichnet, daß**
die Drosselklappe elektronisch betätigbar ist.

**21.** Brennkraftmaschine (1) nach einem der Ansprüche 11 bis 18,
**dadurch gekennzeichnet, daß**
die Umschaltvorrichtung (10) in der Bypaßleitung (9) ein pneumatisch gesteuertes Ventil ist.

**22.** Brennkraftmaschine (1) nach einem der Ansprüche 11 bis 21,
**dadurch gekennzeichnet, daß**
als Aufladeaggregat (2) ein Abgasturbolader (3) vorgesehen ist, und eine zweite, die Turbine (5) des Abgasturboladers (3) umgehende Bypaßleitung (12) vorgesehen ist, die mit einer Umschaltvorrichtung (13) ausgestattet ist, so daß der Abgasstrom stufenlos einstellbar in vorbestimmbar großen Abgasluftteilströmen durch die Turbine (5) des Abgasturboladers (3) und / oder die Bypaßleitung (9) führbar ist.

**23.** Brennkraftmaschine (1) nach einem der Ansprüche 11 bis 22,
**dadurch gekennzeichnet, daß**
eine den Verdichter (4) des Aufladeaggregat (2) umgehende Bypaßleitung (16) vorgesehen ist, die mit einer Umschaltvorrichtung (17) ausgestattet ist, so daß der Ladeluftstrom stufenlos einstellbar in vorbestimmbar großen Ladeluftteilströmen durch den Verdichter (4) des Aufladeaggregat (2) und / oder die Bypaßleitung (16) führbar ist.

Fig.1

EP 1 520 965 A1

Fig.2

**Europäisches Patentamt**

# EUROPÄISCHER RECHERCHENBERICHT

Nummer der Anmeldung

EP 03 10 3666

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 5 036 668 A (HARDY JAMES A) 6. August 1991 (1991-08-06) * Spalte 2, Zeile 60 - Spalte 3, Zeile 10 * * Spalte 3, Zeile 40 - Spalte 4, Zeile 17; Abbildung 1 * --- | 1,2,4, 11,13,15 | F02B29/04 F02B37/00 |
| X | US 3 336 911 A (ANTON STEIGER) 22. August 1967 (1967-08-22) * Spalte 2, Zeile 6 - Zeile 15 * * Spalte 6, Zeile 56 - Zeile 72; Abbildung 1 * --- | 1,2,4,5, 7,8, 11-13, 15,16,19 | |
| X | WO 98 25012 A (CATERPILLAR INC) 11. Juni 1998 (1998-06-11) * Seite 3, Zeile 18 - Seite 4, Zeile 22; Abbildung 1 * * Seite 4, Zeile 33 - Seite 5, Zeile 31 * --- | 1,5,11, 12,16 | |
| X | PATENT ABSTRACTS OF JAPAN vol. 2003, no. 02, 5. Februar 2003 (2003-02-05) & JP 2002 317640 A (HINO MOTORS LTD), 31. Oktober 2002 (2002-10-31) * Zusammenfassung * --- | 1,5,11, 12,16 | RECHERCHIERTE SACHGEBIETE (Int.Cl.7) F02B |
| X | DE 42 40 239 A (SCHMITZ WOLFGANG) 9. Juni 1994 (1994-06-09) * Spalte 2, Zeile 23 - Zeile 56 * * Spalte 3, Zeile 38 - Spalte 5, Zeile 4; Abbildung 1 * ----- | 1,10,11, 22,23 | |

Der vorliegende Recherchenbericht wurde für alle Patentansprüche erstellt

| Recherchenort | Abschlußdatum der Recherche | Prüfer |
|---|---|---|
| MÜNCHEN | 5. März 2004 | Pileri, P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.........................................................................
& : Mitglied der gleichen Patentfamilie, übereinstimmendes Dokument

EPO FORM 1503 03.82 (P04C03)

**EP 1 520 965 A1**

## ANHANG ZUM EUROPÄISCHEN RECHERCHENBERICHT
## ÜBER DIE EUROPÄISCHE PATENTANMELDUNG NR.

EP 03 10 3666

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-03-2004

| Im Recherchenbericht angeführtes Patentdokument | | Datum der Veröffentlichung | Mitglied(er) der Patentfamilie | | Datum der Veröffentlichung |
|---|---|---|---|---|---|
| US 5036668 | A | 06-08-1991 | AU | 7145091 A | 04-02-1992 |
| | | | WO | 9201145 A1 | 23-01-1992 |
| US 3336911 | A | 22-08-1967 | CH | 413494 A | 15-05-1966 |
| | | | GB | 1093430 A | 06-12-1967 |
| | | | NL | 6413534 A | 02-08-1965 |
| WO 9825012 | A | 11-06-1998 | AU | 5005297 A | 29-06-1998 |
| | | | WO | 9825012 A1 | 11-06-1998 |
| JP 2002317640 | A | 31-10-2002 | KEINE | | |
| DE 4240239 | A | 09-06-1994 | DE | 4240239 A1 | 09-06-1994 |

EPO FORM P0461

Für nähere Einzelheiten zu diesem Anhang : siehe Amtsblatt des Europäischen Patentamts, Nr.12/82